# EUROPEAN PATENT APPLICATION

(11) **EP 2 837 792 A1**
(43) Veröffentlichungstag der Anmeldung: **18.02.2015**
(21) Anmeldenummer: 12874089.1
(22) Anmeldetag: 13.04.2012
(51) Int. Cl.: F02B 41/00, F02B 75/32

(54) **VERBRENNUNGSMOTOR**

(71) Anmelder: Galeev, Irek Abudarovich, Chelyabinsk 454014 (RU); Galeev, Damir Abudarovich, Chelyabinsk 454014 (RU)
(72) Erfinder: Galeev, Irek Abudarovich, Chelyabinsk 454014 (RU); Galeev, Damir Abudarovich, Chelyabinsk 454014 (RU)
(74) Vertreter: Jeck, Anton
(86) Internationale Anmeldenummer: PCT/RU2012/000285
(87) Internationale Veröffentlichungsnummer: WO 2013/154453

(57) **Zusammenfassung**

Der Motor weist einen Zylinder mit einem darin eingebauten Kolben, eine mit dem Kolben gekoppelte Triebstange und eine Kurbelwelle auf. Auf der Kurbelwelle ist ein erstes elliptisches Zahnrad so befestigt, dass es mit einem zweiten auf einer zusätzlichen Welle befestigten elliptischen Zahnrad zusammenwirken kann. Der Abstand zwischen den Eingriffspunkten des Zahnrads mit dem Zahnrad und der Drehachse des Zahnrad in den Stellungen der Kurbelwelle, die den oberen und den unteren Totpunktlagen des Kolbens entsprechen, ist gleich dem 1,1- bis 5-fachen Abstand zwischen den Eingriffspunkten und der Drehachse des Zahnrads. Der Abstand zwischen den Eingriffspunkten der Zahnräder und der Drehachse des Zahnrads in den Stellungen der Kurbelwelle, die der Kolbenhubmitte des Kolbens entsprechen, ist gleich dem 0,2- bis 0,9-fachen Abstand zwischen den Eingriffspunkten und der Drehachse des zweiten Zahnrads. Der technische Effekt ist eine Verminderung der Drehgeschwindigkeit der Kurbelwelle während des Kolben-laufs im Bereich der oberen und der unteren Totpunktlagen.

## Beschreibung

Die Erfindung betrifft einen Verbrennungsmotor nach dem Oberbegriff des Anspruchs 1.

Die Erfindung ist im Maschinenbau, und zwar bei Kolbenverbrennungsmotoren und vorwiegend bei Benzin- und Dieselmotoren, einsetzbar. Als Brennstoff können im Kolben-Verbrennungsmotor nach der Erfindung folgende Treibstoffe verwendet werden, z. B.:
- Flüssigkeiten - Benzin-, Dieseltreibstoffe, Spiritus, Biodiesel;
- Gase - Flüssiggas, Naturgas, Wasserstoff, gasförmige Erdölkrackprodukte, Biogas;
- Kohlenmonoxid, welches aus einem Festkraftstoff (Kohle, Torf, Holz) in einem Gasgenerator der Brennstoffleitung des Motors erzeugt wird.

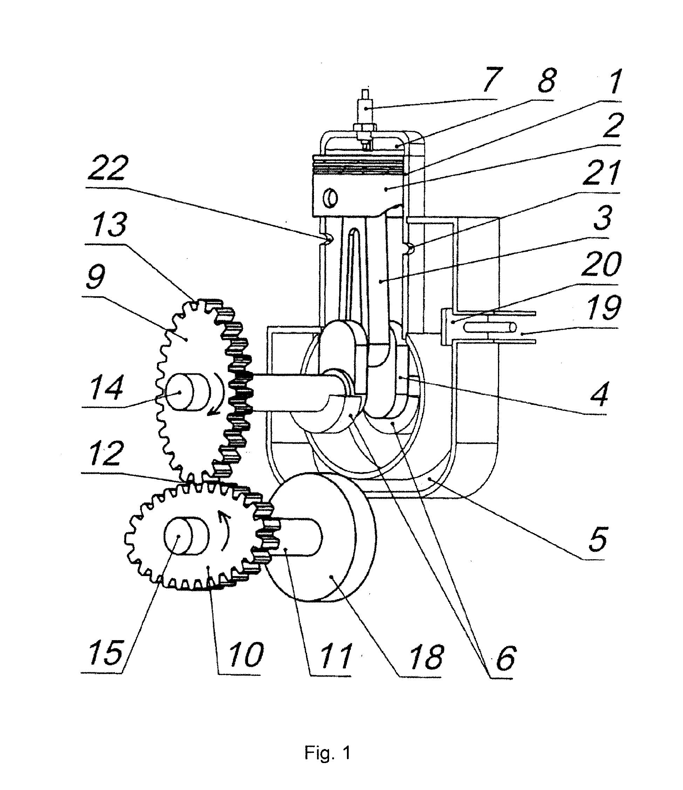

Aus dem Stand der Technik ist ein Kolbenverbrennungsmotor bekannt, welcher im Lehrbuch "Verbrennungsmotoren: Aufbau und Funktion der Kolben- und Kombimotoren", herausgegeben von A.S. Orlina, M.G. Kruglova, M., Verlag Maschinostroyeniye, 1990, Seite 5, 6, Fig. 1, a) beschrieben ist.

Dieser bekannte Motor weist einen Zylinder mit einem Zylinderboden (Zylinderkopf), einen darin eingebrachten Kolben, der mit einer Triebstange gekoppelt ist, eine Kurbelwelle und Ein- und Auslassventile auf.

Dieser bekannte Verbrennungsmotor ist durch seinen ungenügenden Arbeitswirkungsgrad bemängelt. Es liegt am Zeitmangel, um den Kraftstoff vollständig zu verbrennen und Abgase wirksam auszulassen und das Luft-Kraftstoffgemisch in den Zylinder einzulassen. Das geschieht dadurch, dass die Drehgeschwindigkeit der Kurbelwelle bei Verbrennungsmotoren 700 Radiant/Sekunde erreicht. Dabei entfällt zu wenig Zeit auf einzelne Vorgänge, wobei die wichtigsten dieser Vorgänge genau dann ablaufen, wenn der Kolben sich im Bereich des oberen und des unteren Totpunkts befindet. Bei dieser Zeit handelt es sich um nur einige Tausendstel einer Sekunde.

Es ist Aufgabe der Erfindung, den Arbeitswirkungsgrad des Verbrennungsmotors zu steigern.

Die gestellte Aufgabe wird durch die Merkmale des Anspruchs 1 gelöst.

Der technische Effekt der Lösung dieser Aufgabe ist eine Verminderung der Drehgeschwindigkeit der Kurbelwelle während der Bewegung des Kolbens im Bereich der oberen und der unteren Totpunktlagen und eine Steigerung der Drehgeschwindigkeit der Kurbelwelle während des Kolbenlaufs im Mittenbereich des Kolbenhubs.

Erfindungsgemäß ist der bekannte Verbrennungsmotor mit einem Zylinder, einem darin eingebauten und mit einer Triebstange gekoppelten Kolben und einer Kurbelwelle durch zwei unrunde Zahnräder ergänzt. Das erste Zahnrad ist fest auf der Kurbelwelle befestigt. Das zweite Zahnrad ist auf einer zusätzlichen Welle mit dem ersten Zahnrad gegenseitig wirkend so befestigt, dass der Abstand zwischen den Eingriffspunkten des ersten und des zweiten Zahnrads und der Drehachse des ersten Zahnrads in den der oberen und der unteren Totpunktlagen des Kolbens entsprechenden Stellungen der Kurbelwelle gleich dem 1,1- bis 5-fachen Abstand zwischen diesen Eingriffspunkten und der Drehachse des zweiten Zahnrads ist, und dass der Abstand zwischen den Eingriffspunkten des ersten und des zweiten Zahnrads und der Drehachse des ersten Zahnrads bei den der Kolbenhubmitte entsprechenden Stellungen der Kurbelwelle gleich dem 0,2- bis 0,9-fachen Abstand zwischen diesen Eingriffspunkten und der Drehachse des zweiten Zahnrads ist.

Vorteilhafte Ausgestaltungen der Erfindung sind den Unteransprüchen zu entnehmen.

In manchen Einzelfällen der Erfindung können die unrunden Zahnräder elliptisch ausgebildet sein.

Bei anderen Einzelfällen der Erfindung sind die unrunden Zahnräder oval ausgebildet.

Der Motor ist durch zwei unrunde Zahnräder ergänzt. Das erste Zahnrad ist fest auf der Kurbelwelle befestigt. Das zweite Zahnrad ist auf einer zusätzlichen Welle so befestigt, dass eine Zusammenwirkung mit dem ersten Zahnrad möglich ist. Dabei ist das zweite Zahnrad so angeordnet, dass der Abstand zwischen den Eingriffspunkten der beiden Zahnräder und der Drehachse des ersten Zahnrads in den der oberen und der unteren Totpunktlagen des Kolbens entsprechenden Stellungen der Kurbelwelle gleich dem 1,1- bis 5-fachen Abstand von diesen Eingriffspunkten zur Drehachse des zweiten Zahnrads ist. Bei den der Kolbenhubmitte entsprechenden Stellungen der Kurbelwelle ist der Abstand zwischen den Eingriffspunkten der beiden Zahnräder und der Drehachse des ersten Zahnrads gleich dem 0,2- bis 0,9-fachen Abstand zwischen diesen Eingriffspunkten und der Drehachse des zweiten Zahnrads. Die Ergänzung des Motors durch zwei unrunde Zahnräder ermöglicht es, die Drehgeschwindigkeit der Kurbelwelle während des Kolbenlaufs im Bereich der oberen und der unteren Totpunktlagen abzubauen und die Drehgeschwindigkeit der Kurbelwelle während des Kolbenlaufs im Bereich der Kolbenhubmitte zu steigern.

Dadurch ist es möglich, die Kolbenlaufzeit im Bereich der oberen und der unteren Totpunktlagen zu verlängern und somit optimale zeitliche Bedingungen zu schaffen, damit der Brennstoff völlig verbrennen kann, Abgase auslassen zu können und das Luft-Kraftstoffgemisch in den Zylinder einlassen zu können, und folglich den Arbeitswirkungsgrad des Verbrennungsmotors zu erhöhen.

Dabei können die unrunden Zahnräder elliptisch ausgebildet sein.
Die unrunden Zahnräder können auch oval ausgebildet sein.

Die Gesamtheit von wesentlichen Merkmalen vermittelt dem erfindungsgemäßen Motor neue Eigenschaften, um die gestellte Aufgabe zu lösen.

Der Verbrennungsmotor nach der Erfindung ist neu und zeichnet sich im Vergleich zu den bekannten Verbrennungsmotoren durch folgende Merkmale aus:
- Er hat zwei unrunde Zahnräder. Das erste Zahnrad ist fest auf der Kurbelwelle befestigt. Das zweite Zahnrad ist auf einer zusätzlichen Welle so befestigt, dass es mit dem ersten Zahnrad zusammenwirken kann. Dabei ist das zweite Zahnrad so befestigt, dass der Abstand der Eingriffspunkte des ersten und des zweiten Zahnrads zur Drehachse des ersten Zahnrads in den Stellungen der Kurbelwelle, die der oberen und der unteren Totpunktlage des Kolbens entsprechen, gleich dem 1,1- bis 5-fachen Abstand von diesen Eingriffspunkten zur Drehachse des zweiten Zahnrads ist. Bei den der Kolbenhubmitte entsprechenden Stellungen der Kurbelwelle ist der Abstand zwischen den Eingriffspunkten des ersten und des zweiten Zahnrads und der Drehachse des ersten Zahnrads dabei gleich dem 0,2- bis 0,9-fachen Abstand zwischen diesen Eingriffspunkten und der Drehachse des zweiten Zahnrads;
- die unrunden Zahnräder können elliptisch ausgebildet sein;
- die unrunden Zahnräder können auch oval ausgebildet sein.

Die Erfindung kann im Maschinenbau und insbesondere bei Kolben-Verbrennungsmotoren verwendet werden. Die Erfindung ist daher gewerblich anwendbar.

Dem Anmelder ist kein Verbrennungsmotor bekannt, welcher die oben genannten kennzeichnenden wesentlichen Merkmale enthält, um explizit das gleiche technische Ergebnis zu erreichen. Dieser Motor ist nicht naheliegend und kann aus dem Stand der Technik nicht abgeleitet werden. Darum beruht die Erfindung nach Ansicht des Anmelders auf einer erfinderischen Tätigkeit.

Der erfindungsgemäße Verbrennungsmotor wird anhand der Zeichnungen am Beispiel eines Benzin-Zweitaktmotors näher erläutert. Es zeigen:
- Fig. 1: eine Gesamtansicht des Verbrennungsmotors mit einer Teilschnittansicht mit dem Kolben im oberen Totpunkt,
- Fig. 2: eine Gesamtansicht des Verbrennungsmotors mit einer Teilschnittansicht mit dem Kolben im unteren Totpunkt,
- Fig. 3: eine Gesamtansicht des Verbrennungsmotors mit einer Teilschnittansicht mit dem Kolben in der Kolbenhubmitte zum unteren Totpunkt hin und
- Fig. 4: eine Gesamtansicht des Verbrennungsmotors mit einer Teilschnittansicht mit dem Kolben in der Kolbenhubmitte zum oberen Totpunkt hin.

Eine bevorzugte Ausgestaltung der Erfindung stellt der Verbrennungsmotor nach Fig. 1 - 4 dar. Sie enthält einen Zylinder 1 mit einem darin eingebauten und mit einer Triebstange 3 gekoppelten Kolben 2, eine Kurbelwelle 4, die in einer Kurbelkammer 5 in den Lagerungen 6 drehbar eingebaut ist und eine Zündkerze 7 mit Elektroden, die sich in einem Brennraum 8 befinden.

Das erste ovale Zahnrad 9 ist auf der Kurbelwelle 4 so befestigt, dass es mit dem zweiten ovalen Zahnrad 10 zusammenwirken kann. Das zweite Zahnrad 10 ist auf einer zusätzlichen Welle 11 befestigt. Die Welle 11 ist in Drehlagern (in den Zeichnungen nicht abgebildet) so gelagert, dass sie sich zusammen mit dem Zahnrad 10 drehen kann.

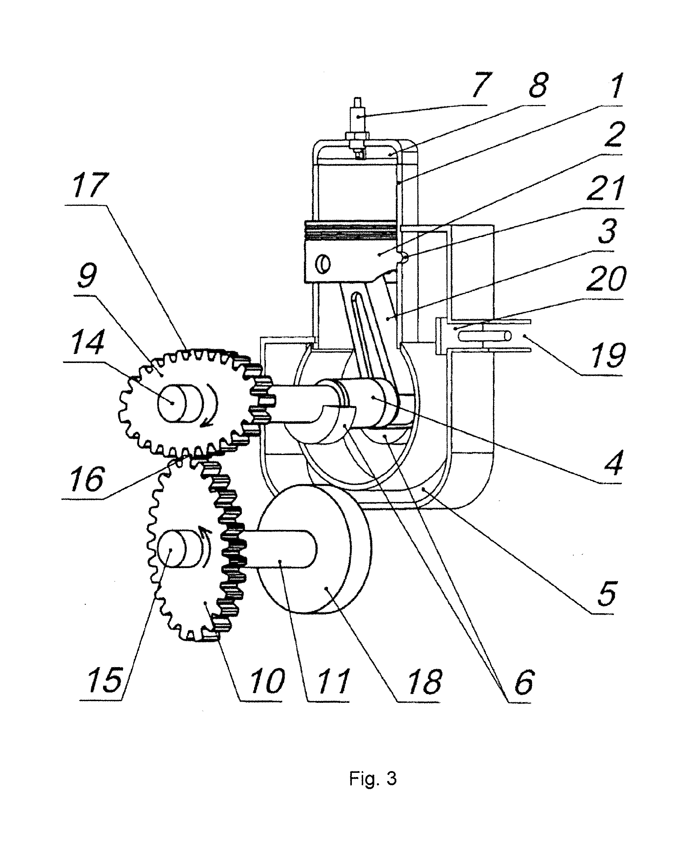

Die unrunden Zahnräder 9 und 10 können oval, elliptisch oder in Form einer Frauenträne (Diphylleia) ausgebildet sein (s. "Mechanismen. Nachschlagebuch", herausgegeben von S.N. Kozhevnikov et al., M, Verlag "Maschinostroyeniye", 1976, Seite 159, Abb. 3.28). Auch andere Arten der unrunden Zahnräder können verwendet werden.

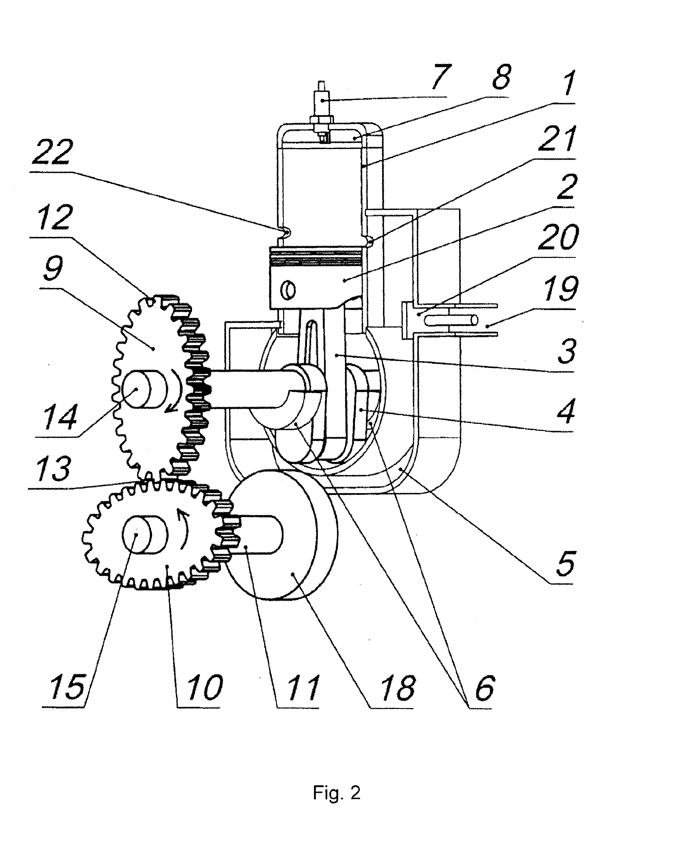

Der Abstand des Eingriffspunkts 12 und des Eingriffspunkts 13 des ersten Zahnrads 9 mit dem zweiten Zahnrad 10 (s. Fig. 1 und 2) zur Drehachse 14 des ersten Zahnrads 9 in den Stellungen der Kurbelwelle 4, die den oberen und den unteren Totpunktlagen des Kolbens 2 entsprechen, beträgt zweimal (2,0) den Abstand der Eingriffspunkte 12 und 13 zur Drehachse 15 des Zahnrads 10.

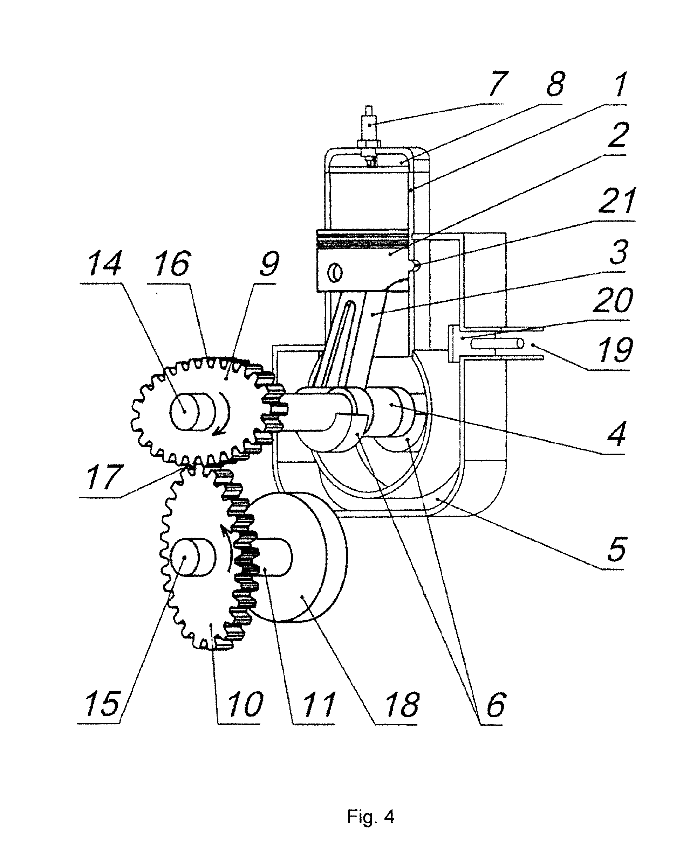

Der Abstand zwischen den Eingriffspunkten 16 und 17 des ersten Zahnrads 9 mit dem zweiten Zahnrad 10 (s. Fig. 3 und 4) und der Drehachse 14 des ersten Zahnrads 9 in den Stellungen der Kurbelwelle 4, die der Kolbenhubmitte des Kolbens 2 entsprechen, ist gleich dem 0,5-fachen Abstand der Eingriffspunkte 16 und 17 zur Drehachse 15 des zweiten Zahnrads 10.

Das Abstandsverhältnis (Abstand zwischen den Eingriffspunkten 12 und 13 und der Drehachse 14 des ersten Zahnrads 9 in den Stellungen der Kurbelwelle 4, die den oberen und den unteren Totpunktlagen des Kolbens 2 entsprechen, zum Abstand zwischen den Eingriffspunkten 12 und 13 und der Drehachse 15 des Zahnrads 10) kann im Bereich von 1,1 bis 5,0 liegen. Das Abstandsverhältnis (Abstand zwischen den Eingriffspunkten 16 und 17 und der Drehachse 14 des ersten Zahnrads 9 in den Stellungen der Kurbelwelle 4, die der Kolbenhubmitte des Kolbens 2 entsprechen, zum Abstand zwischen den Eingriffspunkten 16 und 17 und der Drehachse 15 des zweiten Zahnrads 10) kann im Bereich von 0,2 bis 0,9 liegen. Dies ermöglicht es, den benötigten technischen Effekt zu erreichen.

Bei dieser Ausgestaltung ist die zusätzliche Welle 11 die Abtriebswelle. Darauf ist ein Handrad 18 aufgesetzt. Um das Luft-Kraftstoffgemisch einzulassen, gibt es einen Eintrittsschlitz 19 mit einem Ventil 20 und einen Spülschlitz 21. Um Auspuffgase auszulassen, gibt es einen Auslassschlitz 22.

Die Drehrichtung des Zahnrads 9, 10 ist in Fig. 1 - 4 mit Pfeilen gekennzeichnet. Der Motor weist auch andere Bauteile und Elemente auf, die den Fachleuten bekannt sind. Bei solchen Bauteilen und Elementen handelt es sich unter anderem um eine Pumpe (Pumpen), einen Kühler, elektrische Leitungen, eine elektrische Zündanlage und andere Bauteile für die mechanische Arbeit des Motors (nicht abgebildet). Diese Anmeldung beschreibt nur jene Konstruktionsmerkmale, die dafür benötigt sind, um das Wesen der Erfindung zu verstehen.

Die Motorperiode fängt mit einem Verdichtungshub an, wenn die Kurbelwelle 4 sich in der 180°-Stellung (s. Fig. 2) befindet. Dabei befindet sich der Kolben 2 im unteren Totpunkt. Das erste Zahnrad 9 steht im Eingriff mit dem zweiten Zahnrad 10 im Eingriffspunkt 13. Das Handrad 18 hat eine Drehgeschwindigkeit ω.

Die Belastung des Verbrennungsmotors umfasst dabei das Handrad, das Getriebe usw. Beim Betrieb des Verbrennungsmotors überschreitet das Lastträgheitsmoment das Trägheitsmoment der Kurbelwelle, der Triebstange und des Kolbens. Darum sind die relativen Schwankungen der Drehgeschwindigkeit des Handrads 18 gering. Die zusätzliche Welle 11 läuft innerhalb einer Umdrehung mit einer praktisch unveränderlichen Drehgeschwindigkeit um.

Dank der Massenkraft des Handrads 18 läuft der Kolben 2 vom unteren Totpunkt zum oberen Totpunkt hin und deckt dabei zuerst den Spülschlitz 21 und dann den Auslassschlitz 22 ab.

Der Spülvorgang endet während des Laufs des Kolbens 2 im Bereich des unteren Totpunkts, wo die Drehgeschwindigkeit des ersten Zahnrads 9 ca. zweimal kleiner als die Drehgeschwindigkeit des zweiten Zahnrads 10 ist, denn das Abstandsverhältnis des Abstands zwischen dem Eingriffspunkt 13 und der Drehachse 14 des ersten Zahnrads 9 zum Abstand zwischen dem Eingriffspunkt 13 und der Drehachse 15 des zweiten Zahnrads 10 beträgt ca. 2,0. Dadurch bleibt der Kolben 2 im Bereich des unteren Totpunkts länger. Das wirkt sich auf den Auspuff der Abgase sowie auf die Füllung des Zylinders 1 mit dem Luft-Kraftstoffgemisch positiv aus.

Nachdem der Kolben 2 den Auslassschlitz 22 im Zylinder 1 schließt, endet der Spülvorgang der Abgase mit dem Luft-Kraftstoffgemisch und der Füllvorgang des Zylinders 1 mit dem Luft-Kraftstoffgemisch, und die Verdichtung des eingetretenen Luft-Kraftstoffgemisches fängt an.

Gleichzeitig mit der Verdichtung des Luft-Kraftstoffgemischs in der Kurbelkammer 5 des Verbrennungsraums baut sich ein Unterdruck aufgrund der Dichtheit der Kurbelkammer 5 unter dem Kolben 2 auf. Unter der Wirkung des Kolbens 2 tritt das Luft-Kraftstoffgemisch über den Eintrittsschlitz 19 mit dem öffnenden Ventil 20 in die Kurbelkammer 5 für den nächsten Arbeitszyklus ein.

Das Luft-Kraftstoffgemisch im Verbrennungsraum 8 wird verdichtet, und der Unterdruck in der Kurbelkammer 5 wird dank der Energie des Handrads 18 erzeugt. Das Drehmoment des Handrads 18 wird über die zusätzliche Welle 11 auf das zweite Zahnrad 10, von da aus auf das erste Zahnrad 9 und über die Kurbelwelle 4 und die Triebstange 3 auf den Kolben 2 übertragen.

Sobald der Kolben 2 den oberen Totpunkt (s. Fig. 1) erreicht, steht das erste Zahnrad 9 im Eingriff mit dem zweiten Zahnrad 10 im Eingriffspunkt 12. Die Zündkerze 7 zündet das Luft-Kraftstoffgemisch.

Die bei der Verbrennung des Kraftstoffs freigesetzte Energie wirkt auf den Kolben 2 ein und lässt ihn sich in Richtung des unteren Totpunkts bewegen. Während des Kolbenlaufs des Kolbens 2 im Bereich des oberen Totpunkts ist die Drehgeschwindigkeit des ersten Zahnrads 9 ca. zweimal niedriger als die Drehgeschwindigkeit des zweiten Zahnrads 10, weil das Abstandsverhältnis des Abstands zwischen dem Eingriffspunkt 12 und der Drehachse 14 des ersten Zahnrads 9 zum Abstand zwischen dem Eingriffspunkt 12 und der Drehachse 15 des zweiten Zahnrads 10 ca. 2,0 beträgt. Dadurch wird die Laufzeit des Kolbens 2 im Bereich des oberen Totpunkts verlängert. Das stellt eine Kraftstoffverbrennungsleistung sicher.

Der Kolben 2 baut einen hohen Druck in der Kurbelkammer 5 auf, indem er unter der Druckwirkung der Heißgase nach unten läuft. Unter der Druckwirkung schließt das Ventil 20 und verhindert, dass das heiße Gemisch über den Eintrittsschlitz 19 austritt.

Wenn der Kolben 2 dem unteren Totpunkt näher kommt, wird der Auslassschlitz 22 geöffnet. Dabei fängt der Auslass der Abgase in die Außenluft an. Der Druck im Zylinder 1 wird abgebaut. Bei weiterer Bewegung öffnet der Kolben 2 den Spülschlitz 21. Das in der Kurbelkammer 5 verdichtete Arbeitsgemisch tritt in den Zylinder 1 ein und spült ihn, um die Reste der Abgase zu entfernen.

Beim Lauf des Kolbens 2 von seiner mittleren Lage zum unteren Totpunkt hin vermindert sich die Drehgeschwindigkeit des ersten Zahnrads 9 und wird ca. zweimal kleiner als die Drehgeschwindigkeit des zweiten Zahnrads 10, denn das Verhältnis des Abstands zwischen dem Eingriffspunkt 13 und der Drehachse 14 des ersten Zahnrads 9 zum Abstand zwischen dem Eingriffspunkt 13 und der Drehachse 15 des zweiten Zahnrads 10 im Bereich des unteren Totpunktes beträgt ca. 2,0. Dadurch bleibt der Kolben 2 länger im Bereich des unteren Totpunkts. Das wirkt sich positiv auf den Auslass der Abgase sowie auf die Füllung des Zylinders 1 mit dem Luft-Kraftstoffgemisch aus.

Der eine Zyklus ist zu Ende, dann fängt ein neuer Zyklus an.

Die erfindungsgemäße Konstruktion kann auch in Viertaktmotoren und anderen Arten von Kolben-Verbrennungsmotoren eingesetzt werden.

Der erfindungsgemäße Verbrennungsmotor ist gegenüber dem Prototyp wirksamer und zwar dadurch, dass die Drehgeschwindigkeit der Kurbelwelle während des Kolbenlaufs im Bereich der oberen und der unteren Totpunktlagen abnimmt und dass die Drehgeschwindigkeit der Kurbelwelle während des Kolbenlaufs im Mittenbereich des Kolbenhubs zunimmt.

Der Wirkungsgrad des erfindungsgemäßen Verbrennungsmotors wird auch dadurch erreicht, dass das Drehmoment auf der Kurbelwelle am Ende des Verdichtungshubs erhöht wird, welcher es ermöglicht, die Massenkraft des Handrads zu vermindern, den minimalen Schwellenwert der Leerlaufdrehzahl des Verbrennungsmotors zu verringern und/oder ggf. den Verdichtungsgrad des Kraftstoffgemischs zu steigern.

Die Erfindung ist anhand der in der Industrie weit verbreiteten Mehrzweckanlagen ausgeführt.

## Patentansprüche

1. Verbrennungsmotor mit einem Zylinder (1), einem darin eingebauten Kolben (2), einer mit dem Kolben (2) gekoppelten Triebstange (3) und einer Kurbelwelle (4),
**dadurch gekennzeichnet,**
**dass** er zwei unrunde Zahnräder (9, 10) aufweist, wobei das erste Zahnrad (9) fest auf der Kurbelwelle (4) und das zweite Zahnrad (10) auf einer zusätzlichen Welle (11) mit dem ersten Zahnrad (9) gegenseitig wirkend befestigt ist, dass das zweite Zahnrad (10) so angeordnet ist, dass der Abstand zwischen den Eingriffspunkten (12, 13) des ersten (9) und des zweiten Zahnrads (10) und der Drehachse (14) des ersten Zahnrads (9) in den der oberen und der unteren Totpunktlagen des Kolbens (2) entsprechenden Stellungen der Kurbelwelle (4) gleich dem 1,1- bis 5-fachen Abstand von diesen Eingriffspunkten (12, 13) zur Drehachse (15) des zweiten Zahnrads (10) ist und
**dass** bei den der Kolbenhubmitte entsprechenden Stellungen der Kurbelwelle (4) der Abstand zwischen den Eingriffspunkten (16, 17) des ersten (9) und des zweiten Zahnrads (10) und der Drehachse (14) des ersten Zahnrads (9) gleich dem 0,2- bis 0,9-fachen Abstand zwischen diesen Eingriffspunkten (16, 17) und der Drehachse (15) des zweiten Zahnrads (10) ist.

2. Verbrennungsmotor nach Anspruch 1,
**dadurch gekennzeichnet,**
**dass** die unrunden Zahnräder elliptisch ausgebildet sind.

3. Verbrennungsmotor nach Anspruch 1,
**dadurch gekennzeichnet,**
**dass** die unrunden Zahnräder oval ausgebildet sind.
